(19) Europäisches Patentamt
European Patent Office
Office européen des brevets

(11) **EP 3 580 886 B1**

(12) **EUROPEAN PATENT SPECIFICATION**

(45) Date of publication and mention of the grant of the patent:
**26.10.2022 Bulletin 2022/43**

(21) Application number: **17709090.9**

(22) Date of filing: **07.03.2017**

(51) International Patent Classification (IPC):
**H04L 9/08** *(2006.01)*    **G09C 1/00** *(2006.01)*

(52) Cooperative Patent Classification (CPC):
**H04L 9/0858; G09C 1/00**

(86) International application number:
**PCT/EP2017/055327**

(87) International publication number:
**WO 2018/162042 (13.09.2018 Gazette 2018/37)**

(54) **SELF-REFERENCED CONTINOUS-VARIABLE QUANTUM KEY DISTRIBUTION DEVICES, METHODS AND SYSTEMS**

VORRICHTUNGEN, VERFAHREN UND SYSTEME FÜR SELBSTREFERENZIERTE KONTINUIERLICH-VARIABLE QUANTENSCHLÜSSELVERTEILUNG

DISPOSITIFS, PROCÉDÉS, ET SYSTÈMES DE DISTRIBUTION DE CLÉS QUANTIQUES À VARIABLES CONTINUES AUTO-RÉFÉRENCÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.12.2019 Bulletin 2019/51**

(73) Proprietor: **Huawei Technologies Co., Ltd.**
**Longgang District**
**Shenzhen, Guangdong 518129 (CN)**

(72) Inventors:
• **FUNG, Fred, Chi, Hang**
**80992 Munich (DE)**
• **WANG, Dawei**
**80992 Munich (DE)**

(74) Representative: **Gill Jennings & Every LLP**
**The Broadgate Tower**
**20 Primrose Street**
**London EC2A 2ES (GB)**

(56) References cited:
• **DANIEL B.?S. SOH ET AL: "Self-Referenced Continuous-Variable Quantum Key Distribution Protocol", PHYSICAL REVIEW X, vol. 5, no. 4, 1 October 2015 (2015-10-01) , XP055316963, DOI: 10.1103/PhysRevX.5.041010**
• **GYONGYOSI L ET AL: "Adaptive Gaussian quadrature detection for continuous-variable quantum key distribution", PROCEEDINGS OPTICAL DIAGNOSTICS OF LIVING CELLS II, SPIE, US, vol. 9762, 15 March 2016 (2016-03-15), pages 97620E-97620E, XP060069942, ISSN: 0277-786X, DOI: 10.1117/12.2211743 ISBN: 978-1-5106-1354-6**
• **Bing Qi ET AL: "Generating the Local Oscillator "Locally" in Continuous-Variable Quantum Key Distribution Based on Coherent Detection", Physical Review X, vol. 5, no. 4, 1 October 2015 (2015-10-01) , XP055316967, DOI: 10.1103/PhysRevX.5.041009**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

Generally, the present invention relates to the field of quantum key distribution. More specifically, the present invention relates to continuous variable quantum key distribution (CV QKD) devices, methods and systems.

### BACKGROUND

Quantum key distribution (QKD) is based on quantum carriers (also referred to as quantum signals), typically single-photon or strongly attenuated light pulses, for sharing a secret electronic key. Typically, a sequence of such light pulses, i.e. quantum signals, is transmitted from a transmitter (often referred to as "Alice") via a quantum channel to a receiver (often referred to as "Bob"), wherein each light pulse encodes a key bit. The quantum properties of light, in particular the Heisenberg uncertainty principle, ensure that no information can be gained on these key bits without disturbing the quantum state of the photons. Public communications over an additional classical channel are then used to estimate the maximum amount of information that a potential eavesdropper may have acquired, and to distil a secret key out of the raw data.

Several practical schemes for quantum key distribution have been proposed and implemented in the past, including discrete-variable and continuous-variable (CV) QKD. CV QKD systems make use of continuous quantum variable, such as the electric field amplitudes, to obtain possibly more efficient alternatives to conventional photon-counting QKD techniques. From a practical point of view, the CV approach has potential advantages because it is compatible with standard optical telecommunication technologies. It is foreseeable that this approach will become a viable candidate for large-scale secure quantum communications.

Current CV QKD systems often use some kind of reference pulse transmitted from the transmitter to the receiver for estimating channel impairments and mostly rely on discrete pulses to encode quantum signals. For instance, compensating channel impairments by transmitting special reference signals, such as strong pilot tones at other frequencies, has been proposed in the article "Simple and Efficient Detection Scheme for Continuous Variable Quantum Key Distribution with m-ary Phase-Shift-Keying"; Sebastian Kleis, Reinhold Herschel, Christian G. Schaffer; CLEO: 2015, OSA (2015). Compensating channel impairments on the basis of reference pulses transmitted at different times than the quantum signals has been suggested in Bing Qi, Pavel Lougovski, Raphael Pooser, Warren Grice, and Miljko Bobrek, "Generating the local oscillator locally in continuous-variable quantum key distribution based on coherent detection", Phys. Rev. X 5, 041009 (2015); D. Huang, P. Huang, D. Lin, C. Wang, and G. Zeng, "High-speed continuous-variable quantum key distribution without sending a local oscillator", Optics Letters 40, 3695 (2015) and Daniel B. S. Soh, Constantin Brif, Patrick J. Coles, Norbert Lutkenhaus, Ryan M. Camacho, Junji Urayama, and Mohan Sarovar, "Self-referenced continuous-variable quantum key distribution protocol", Phys. Rev. X 5, 041010 (2015).

However, using dedicated reference or pilot signals renders the design of CV QKD systems more complex and makes inefficient use of the available channel resources. Thus, there is a need for improved devices, methods and systems for continuous variable quantum key distribution.

GYONGYOSI L ET AL, "Adaptive Gaussian quadrature detection for continuous-variable quantum key distribution", PROCEEDINGS OPTICAL DIAGNOSTICS OF LIVING CELLS II, SPIE, US, (20160315), vol. 9762, doi:10.1117/12.2211743, ISSN 0277-786X, ISBN 978-1-5106-1354-6, pages 97620E - 97620E relates to adaptive Gaussian quadrature detection for continuous-variable quantum key distribution.

Bing Qi ET AL: "Generating the Local Oscillator "Locally" in Continuous-Variable Quantum Key Distribution Based on Coherent Detection", Physical Review X, vol. 5, no. 4, 1 October 2015 (2015-10-01), proposed generating the local oscillator "locally" in continuous-variable quantum key distribution based on coherent detection.

### SUMMARY

It is an object of the invention to provide improved devices, methods and systems for continuous variable quantum key distribution.

The foregoing and other objects are achieved by the subject matter of the independent claims. Further implementation forms are apparent from the dependent claims, the description and the figures.

Contrary to conventional QKD systems, where the quantum signals are used for secret key generation only, the present invention is based on the general idea of using the quantum signals also for determining channel impairments as well as corresponding compensations. For instance, the quantum signals may be randomly selected and used for channel estimation in order to compensate for the channel impairments. Embodiments of the invention are based on the idea of capitalizing on the power of digital signal processing (DSP) machinery to compensate for the physical channel impairments such as phase noise, frequency offset, timing jitter, using a simple optical transmitter-receiver structure (these issues are particularly evident in embodiments, where a local oscillator is used for amplifying the quantum signal at the receiver, such as a heterodyne receiver or a homodyne receiver (sometimes collectively referred to as coherent receivers).

More specifically, according to a first aspect the invention relates to a receiver for a continuous variable quantum key distribution system. The receiver is configured to receive a stream of quantum signals via a quantum communication channel from a transmitter of the continuous variable quantum key distribution system, wherein each quantum signal of the stream of quantum signals is modulated with a continuous distribution in phase and/or amplitude. The receiver is further configured to perform a channel estimation of the quantum communication channel on the basis of the quantum signals of a first subset of the stream of quantum signals and to modify, i.e. distort the quantum signals of a second subset of the stream of quantum signals on the basis of the channel estimation of the quantum communication channel for generating a secret key. In an implementation form each quantum signal defines a quantum coherent state. In an implementation form a quantum signal is a signal comprising, for instance, 10 photons or less on average. In an implementation form each quantum signal of the stream of quantum signals can be modulated, for instance, with a continuous distribution in phase and/or amplitude using four phases separated by 90 degrees, Gaussian modulation, 8, 16, 32 PSK modulation and/or 64 QAM.

Thus, an improved receiver for a continuous variable quantum key distribution system is provided, which allows estimating and compensating channel impairments without the need for reference or pilot signals. Since no reference signals have to be transmitted from the transmitter to the receiver, this eliminates the potential vulnerability due to manipulation of the reference signal by an attack to steal information about the final secret key.

In a first possible implementation form of the receiver according to the first aspect as such, the stream of quantum signals is a continuous stream of quantum signals and the receiver is further configured to determine boundaries between successive quantum signals for synchronizing the receiver with the transmitter.

Using a continuous wave transmission has the advantage that in operation there are always quantum signals, which are received at the receiver at all times and can be sampled at a rate possibly multiple times the signaling rate. Since generally QKD systems produce a secret key bit stream in a non-real-time fashion anyway, computationally sophisticated non-causal estimation algorithms can be used by the receiver for estimating the physical channel impairments and compensating these in the key generating quantum signals. Moreover, this allows determining the boundaries between the quantum signals, which are helpful for further QKD post-processing.

In a second possible implementation form of the receiver according to the first aspect as such or the first implementation form thereof, the receiver comprises a balanced detector for demodulating the quantum signals of the stream of quantum signals.

In a third possible implementation form of the receiver according to the first aspect as such the first or second implementation form thereof, the receiver further comprises a local oscillator and is configured to amplify the quantum signals of the stream of quantum signals on the basis of the local oscillator.

In a fourth possible implementation form of the receiver according to the first aspect as such or any one of the first to third implementation form thereof, the receiver is configured to randomly select the first subset from the stream of quantum signals and to exchange information about the randomly selected signals with the transmitter.

In a fifth possible implementation form of the receiver according to the first aspect as such or any one of the first to third implementation form thereof, the receiver is configured to select a predefined set of quantum signals as the first subset of the stream of quantum signals.

In a sixth possible implementation form of the receiver according to the first aspect as such or any one of the first to seventh implementation form thereof, the receiver is configured to dynamically adjust the number of quantum signals of the first subset of quantum signals on the basis of the channel estimation of the quantum communication channel.

The QKD receiver according to the sixth implementation form is adaptive with respect to the training, i.e. the estimation of the channel impairments, since the training data and the key data can come from the same quantum signals. The amount of data allocated to training can be easily adjusted dynamically. For instance, the QKD receiver can be configured to use a variable amount of training data determined on the fly.

In a seventh possible implementation form of the receiver according to the first aspect as such or any one of the first to sixth implementation form thereof, the receiver is configured to modify the quantum signals of the second subset of the stream of quantum signals on the basis of the channel estimation of the quantum communication channel for generating a secret key by adjusting the respective phase of the quantum signals of the second subset of the stream of quantum signals on the basis of the channel estimation of the quantum communication channel.

According to a second aspect the invention relates to a continuous variable quantum key distribution system, comprising: a transmitter configured to modulate a stream of quantum signals with a continuous distribution in phase and/or amplitude; and a receiver according to the first aspect as such or one any one of the first to seventh implementation form thereof.

In a first possible implementation form of the system according to the second aspect as such, the transmitter comprises an attenuator configured to attenuate the quantum signals.

In a second possible implementation form of the system according to the second aspect as such or the first implementation form thereof, the system further comprises a classical communication channel for exchanging information between the transmitter and the receiver about the first subset of the stream of quantum signals.

According to a third aspect the invention relates to a continuous variable quantum key distribution method, comprising the steps of: modulating a stream of quantum signals with a continuous distribution in phase and/or amplitude, wherein each quantum signal defines a quantum coherent state; receiving the stream of quantum signals via a quantum communication channel; performing a channel estimation of the quantum communication channel on the basis of the quantum signals of a first subset of the stream of quantum signals; and modifying, i.e. distorting the quantum signals of a second subset of the stream of quantum signals on the basis of the channel estimation of the quantum communication channel for generating a secret key.

Thus, an improved method for continuous variable quantum key distribution is provided.

In a first possible implementation form of the method according to the third aspect as such, the stream of quantum signals is a continuous stream of quantum signals and the method comprises the further step of determining boundaries between successive quantum signals for synchronization between the receiver and the transmitter.

In a second possible implementation form of the method according to the third aspect as such or the first implementation form thereof, the method comprises the further step attenuating the quantum signals at the transmitter.

In a third possible implementation form of the method according to the third aspect as such or the first or second implementation form thereof, the method comprises a further step of demodulating the quantum signals of the stream of quantum signals using a balanced detector of the receiver.

In a fourth possible implementation form of the method according to the third aspect as such or any one of the first to third implementation form thereof, the method comprises the further step of amplifying the quantum signals of the stream of quantum signals on the basis of a local oscillator of the receiver.

In a fifth possible implementation form of the method according to the third aspect as such or any one of the first to fourth implementation form thereof, the method comprises the further step of exchanging information via a classical communication channel between the transmitter and the receiver about the first subset of the stream of quantum signals.

In a sixth possible implementation form of the method according to the third aspect as such or any one of the first to fifth implementation form thereof, the method comprises the further steps of randomly selecting the first subset from the stream of quantum signals by the receiver and exchanging information about the randomly selected signals with the transmitter.

In a seventh possible implementation form of the method according to the third aspect as such or any one of the first to fifth implementation form thereof, the method comprises the further step of selecting a predefined set of quantum signals as the first subset of the stream of quantum signals by the receiver.

In an eighth possible implementation form of the method according to the third aspect as such or any one of the first to seventh implementation form thereof, the method comprises the further step of dynamically adjusting the number of quantum signals of the first subset of quantum signals on the basis of the channel estimation of the quantum communication channel by the receiver.

In a ninth possible implementation form of the method according to the third aspect as such or any one of the first to eighth implementation form thereof, the step of modifying the quantum signals of the second subset of the stream of quantum signals on the basis of the channel estimation of the quantum communication channel for generating a secret key comprises the step of adjusting the respective phase of the quantum signals of the second subset of the stream of quantum signals on the basis of the channel estimation of the quantum communication channel.

According to a fourth aspect the invention relates to a computer program comprising program code for performing the method according to the third aspect when executed on a computer.

The invention can be implemented in hardware and/or software.

BRIEF DESCRIPTION OF THE DRAWINGS

Further embodiments of the invention will be described with respect to the following figures, wherein:

Fig. 1 shows a schematic diagram illustrating a CV QKD system comprising a transmitter and a receiver according to an embodiment;

Fig. 2 shows a schematic diagram illustrating a block of quantum signals received by a receiver of a CV QKD system according to an embodiment;

Fig. 3 shows a schematic diagram illustrating different aspects of a CV QKD system comprising a transmitter and a receiver according to an embodiment;

Fig. 4 shows a schematic diagram illustrating a scheme of selecting training signals implemented in a CV QKD system comprising a transmitter and a receiver according to an embodiment;

Fig. 5 shows a schematic diagram illustrating a block of quantum signals used for frequency offset estimation in a CV QKD system comprising a transmitter and a receiver according to an embodiment; and

Fig. 6 shows a schematic diagram illustrating a continuous variable quantum key distribution method according to an embodiment.

In the various figures, identical reference signs will be used for identical or at least functionally equivalent features.

## DETAILED DESCRIPTION OF EMBODIMENTS

In the following description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

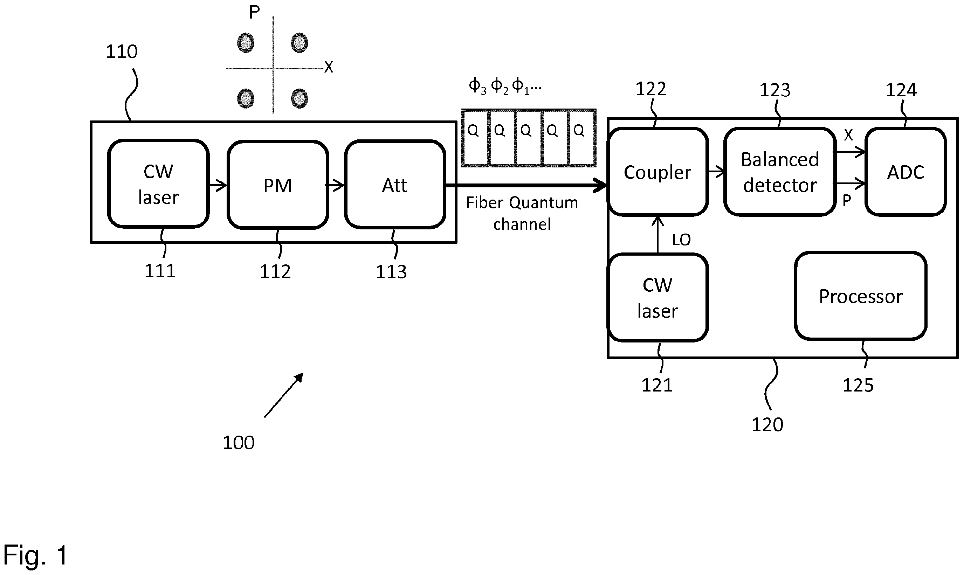

Figure 1 shows a schematic diagram illustrating a CV QKD system 100 comprising a transmitter 110 and a receiver 120 according to an embodiment. The transmitter 110 is configured to modulate a stream of quantum signals with a continuous distribution in phase and/or amplitude, wherein preferably each quantum signal defines a quantum coherent state. The receiver 120 is configured to receive the stream of modulated quantum signals via a quantum communication channel from the transmitter 110. As will be described in more detail further below, the receiver 120 is further configured to perform a channel estimation of the quantum communication channel on the basis of the quantum signals of a first subset of the stream of quantum signals and to modify the quantum signals of a second subset of the stream of quantum signals on the basis of the channel estimation of the quantum communication channel for generating a secret key.

At the transmitter 110 a continuous wave is emitted. In the embodiment shown in figure 1, the transmitter 110 comprises a phase modulator 112, which during every transmission period encodes a quantum state in one of four phases $\{\pi/4, 3\pi/4, 5\pi/4, 7\pi/4\}$ onto the wave. In an embodiment, the four phases are chosen to be 90° apart from each other. It will be appreciated, however, that other types of modulation can be used as well. For instance, in embodiments of the invention Gaussian modulation, 8, 16, 32 PSK modulation and/or 64 QAM can be used by the transmitter 110 of the CV QKD system 100.

Each period of the transmission can be regarded as a quantum coherent state with the modulated phase. In the embodiment shown in figure 1, the transmitter 110 further comprises an attenuator 113 configured to attenuate the continuous signal provided by the phase modulator 112 to a weak signal, e.g. a signal with 10 photons or less on average.

In the embodiment shown in figure 1, the receiver 120 comprises a continuously emitting CW (continuous wave) laser 121 acting as the local oscillator (LO), which can be used by a coupler 122 of the receiver 120 to amplify the incoming signal. Moreover, the receiver shown in figure 1 comprises a balanced detector 123, which is configured to perform X and P (also referred to as I and Q) quadrature measurements on the continuously incoming signal. Suitable designs for the balanced detector 123 are known from the prior art. Furthermore, the receiver 120 can comprise a processor 125 to perform one or more of the signal processing steps described above and/or in the following.

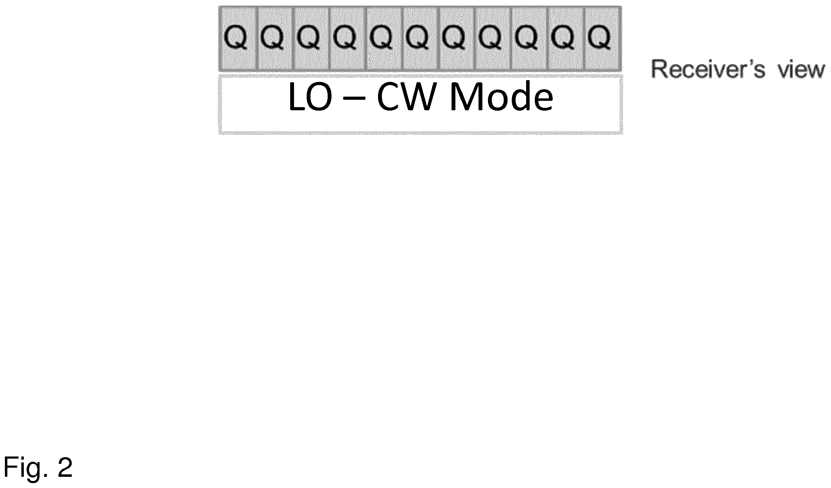

Figure 2 shows a schematic illustration of a signal block received by the receiver 120, which comprises several quantum signals. The input quantum signal and the LO interfere in the balanced detector 123 of the receiver 120 to recover the original signal in the X-P (or I-Q) plane. This provides an estimation of the original signal, which normally differs from the original signal due to channel impairments. In an embodiment, the phase estimation by the receiver 120 can be based on a minimization of the Euclidean distance between the transmitter signal and the receiver signal. Other approaches for phase estimation can be implemented in the receiver 120 as well.

As already described above, some of these signals (i.e. the signals of the first subset of the stream of quantum signals) are used to estimate the channel impairments and some are used for key generation (i.e. the signals of the second subset of the stream of quantum signals). The analog signal output from the balanced detector 123 is sampled by an analog to digital converter (ADC) 124. The ADC 124 continuously samples the signal at a high sampling rate, e.g. a sampling rate being larger than a few times the signaling rate. This allows all energy spread over time to be captured.

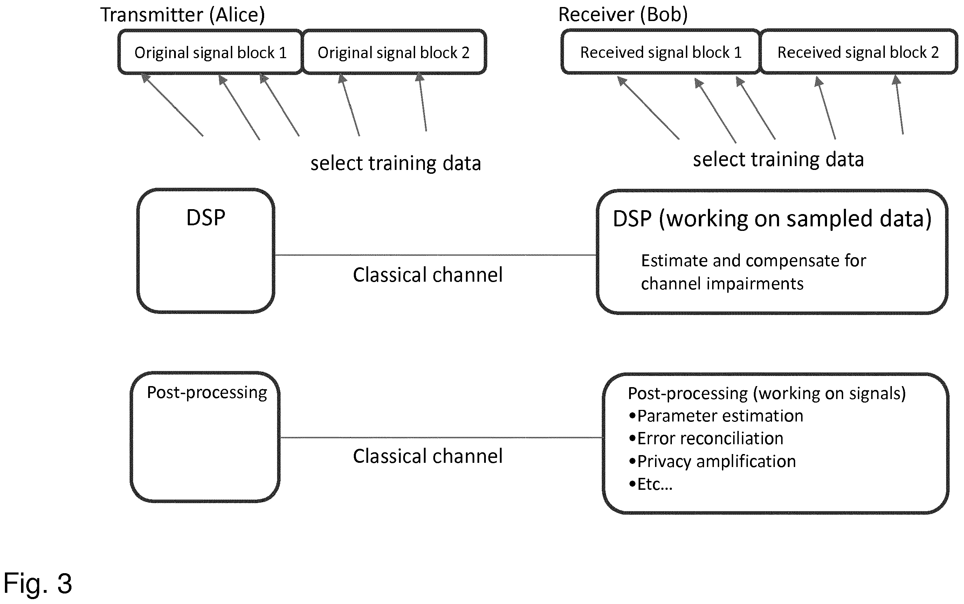

In an embodiment, the DSP procedures implemented in the processor 125 of the receiver 120 can make use of an authenticated classical communication channel for exchanging classical messages between the transmitter 110 (i.e. Alice) and the receiver 120 (i.e. Bob), such as for exchanging some reference values for training, as illustrated in figure 3. Such a classical communication channel generally exists in addition to the quantum communication channel in standard CV QKD systems for post-processing of the data and, thus, the use of a classical communication channel for the DSP procedures implemented in the processor 125 does not constitute an additional requirement. Moreover, such a classical communication channel does not need to be operated in real-time and may operate at the transport layer in the standard computer networking model (such as the TCP/IP model), for DSP and QKD post-processing to operate correctly.

In an embodiment, the training signals (i.e. the signals of the first subset of the stream of quantum signals) and the corresponding samples, representing some portion of all the signals, are used for channel estimation and synchronization to determine the signal boundaries. In an embodiment, the digital signal processing implemented in the processor 125 operates on the sampled data and does not need to feedback to the optical components of the receiver 120 in real-time. In an embodiment, the digital signal processing implemented in the processor 125 is configured to compensate for channel impairments such as phase noise, frequency offset, timing jitter, and to determine the signal boundaries. After these steps a QKD post-processing block can be performed. In an embodiment, this involves preparing the sampled data as one value for each signal together with the soft information. In an embodiment, the QKD post-processing scheme can be based on CV QKD standard procedures, as disclosed e.g., in Lodewyck et al., "Quantum key distribution over 25 km with an all-fiber continuous-variable system", Physical Review A 76, 042305 (2007) or "Unconditional security proof of long-distance continuous-variable quantum key distribution with discrete modulation", Physical Review Letters 102, 180504 (2009).

In accordance with different embodiments the training signals (i.e. the signals of the first subset of the stream of quantum signals) can be selected in various ways. In an embodiment, the training signals can be randomly selected among all quantum signals received from the transmitter 110. Such an embodiment allows a dynamic selection which can be adapted to the channel condition and the algorithm's performance when processing a particular block of data. In other words, in an embodiment the receiver 120 is configured to dynamically adjust the number of training signals (i.e. quantum signals of the first subset of quantum signals) on the basis of the channel estimation of the quantum communication channel. For example, the CV QKD system 100 may test the error for another small random set of data to check whether the training has achieved a sufficient accuracy. If the test error is larger than the training error, the CV QKD system 100 can dynamically increase the size of the training set by including additional quantum signals.

In an aspect of the invention, the number and respective positions of the training signals relative to the key generating signals can be predefined before transmission.

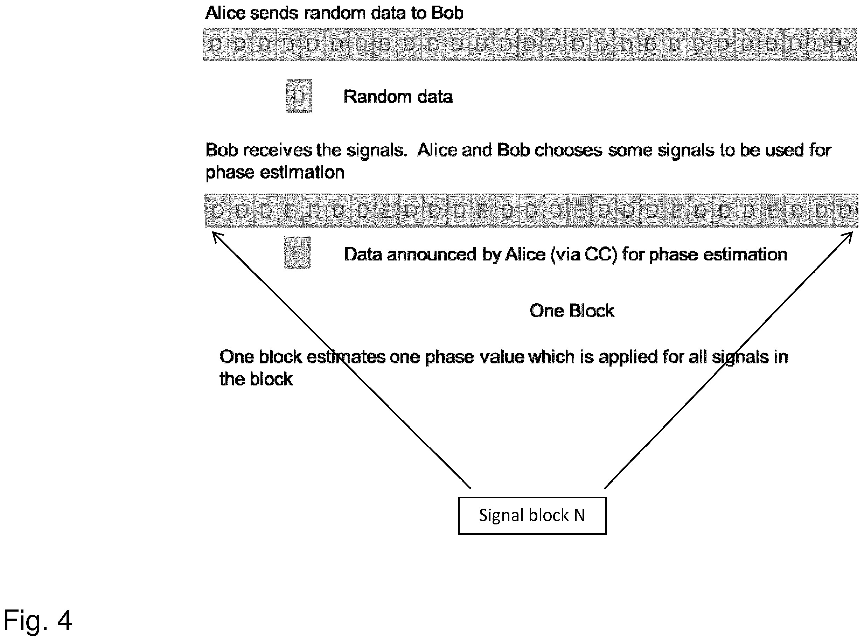

Figure 4 shows a diagram illustrating how the QKD signals may be allocated for training to estimate the relative phase between the transmitter 110 (i.e. Alice) and the receiver 120 (i.e. Bob) and the phase noise. In the embodiment shown in figure 4 the training signals are randomly picked, as already described above. In an embodiment, the number of training signals used can be dynamically adjusted. In the embodiment shown in figure 4, the transmitter 110 (i.e. Alice) communicates via the classical channel (CC) with the receiver 120 (i.e. Bob), which quantum signals of a signal block (N) should be used for training, i.e. channel estimation. The quantum signals randomly selected for estimation by the transmitter 110 (i.e. Alice) are used for estimating a phase value, which will then be used for correcting the phase values of the quantum signals.

In an embodiment, the phase estimation may be performed on the basis of the following equation:

$$Ae^{i\phi} = \frac{1}{|\mathcal{S}|} \sum_{s \in \mathcal{S}} v_s e^{-i\phi_s}$$

where S denotes the set of detected quantum signals E selected for training, i.e. channel estimation, and $v_S$ are the sampled complex values associated with the detected quantum signals E in the set S. The left-hand side can be estimated using the complex values $v_S$ of Bob's sampled data for estimation purposes and Alice's reference phase value $\phi_S$ for s in the set $S$ of data for estimation. In an embodiment, the reference phase value is transmitted from the transmitter 110 (i.e. Alice) to the receiver 120 (i.e. Bob) as side information. The reference phase does not need to be transmitted in real time. Thus, it can be transmitted via an out of band classical channel, which could be a different fiber.

Further to the equation above other schemes for estimating the phase can be implemented in the CV QKD system 100 as well. For instance, in an embodiment, the phase can be estimated based on the Euclidean distance between the signals $|X_i + jP_i\rangle$ generated by the transmitter 110 (i.e. Alice) and modified by the quantum channel and the signal $(X_i, P_i)$ detected at the receiver 120 (i.e. Bob). In an embodiment, the Euclidean distance between the signals generated by the transmitter 110 and the signals detected at the receiver 120 is minimized over the quantum channel, which can be described by a matrix C (which in an embodiment is a rotation matrix). In an embodiment, the phase can be estimated on the basis of the channel matrix C by minimizing the Euclidean distance mentioned above.

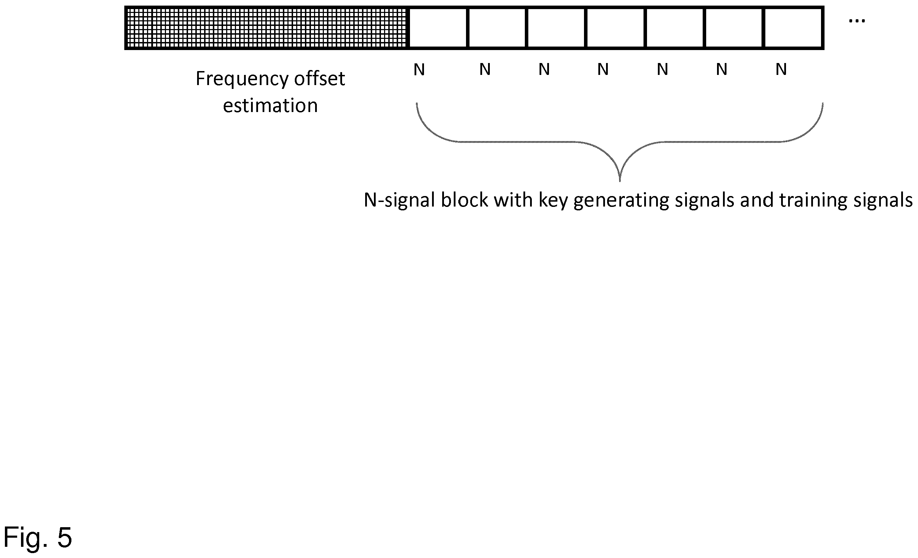

Figure 5 shows a schematic diagram illustrating a block of quantum signals used for frequency offset estimation in the CV QKD system 100 comprising the transmitter 110 and the receiver 120 according to an embodiment. As illustrated in figure 5, in an embodiment the frequency offset estimation may be performed by using consecutive sampled data for training.

As described above each signal block can be described with good approximation with one phase. Thus, phase adjustment only has to be performed once per block. The subsequent data contains the key generating signals and perhaps also training signals for phase estimation. In this example, the data is divided into blocks and each block carries its own phase estimation. However, this is not necessary. A sliding window approach for phase estimation is also possible.

In an embodiment, the DSP algorithms implemented in the processor 125 of the receiver 120 can be based on non-causal maximum a posteriori (MAP) or maximum likelihood (ML) estimation. This is possible, because embodiments of the invention do not require real-time feedback. It should be appreciated, however, that suboptimal algorithms may be employed as well.

In an embodiment of the invention, the system 100 is configured to perform additional conventional QKD post-processing steps, which can include conventional channel estimation steps. These conventional channel estimation steps can be used for estimating the SNR and/or the BER at the logical level, but generally do not include any compensation steps (contrary to embodiments of the present invention, which compensate physical channel impairments at the optical level).

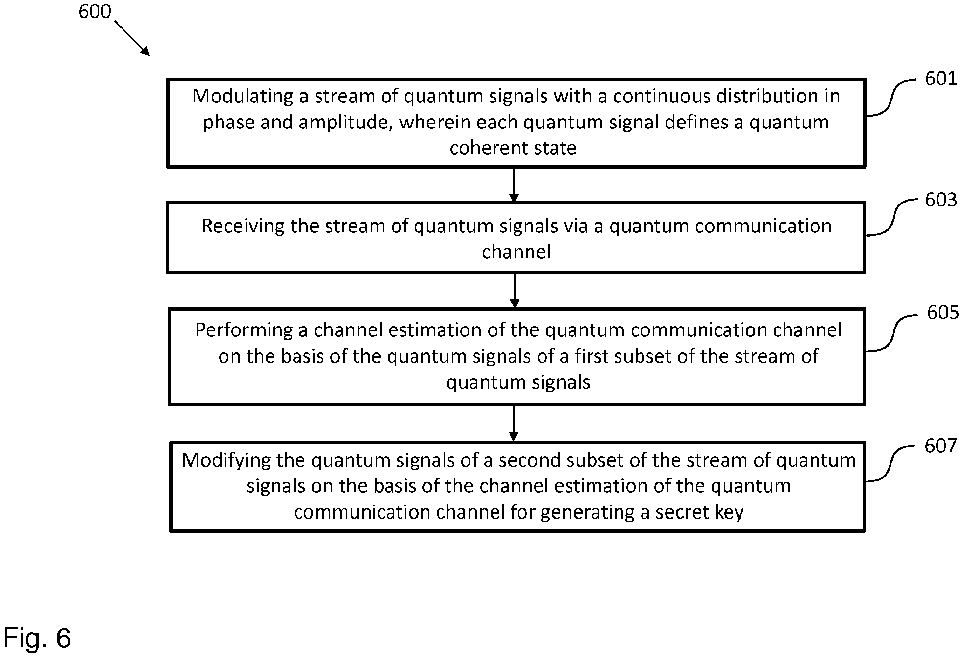

Figure 6 shows a schematic diagram illustrating a continuous variable quantum key distribution method 600 according to an embodiment. The method 600 comprises the steps of: modulating 601 a stream of quantum signals with a continuous distribution in phase and/or amplitude; receiving 603 the stream of quantum signals via a quantum communication channel; performing 605 a channel estimation of the quantum communication channel on the basis of the quantum signals of a first subset of the stream of quantum signals; and modifying 607 the quantum signals of a second subset of the stream of quantum signals on the basis of the channel estimation of the quantum communication channel for generating a secret key.

While a particular feature or aspect of the disclosure may have been disclosed with respect to only one of several implementations or embodiments, such a feature or aspect may be combined with one or more further features or aspects of the other implementations or embodiments as may be desired or advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives thereof may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A continuous variable quantum key distribution system (100), comprising a transmitter (110) and a receiver (120), wherein the transmitter and the receiver are configured for communication using a quantum communication channel and a classical communication channel;
the transmitter (110) is configured for:

modulating a stream of quantum signals with a continuous distribution in phase and/or amplitude, and sending the stream of quantum signals to the receiver via the quantum communication channel; and
the receiver (120) is configured for:

receiving the stream of quantum signals from the transmitter via the quantum communication channel,
performing a channel estimation of the quantum communication channel on the basis of a first subset of the stream of quantum signals;
modifying a second subset of quantum signals on the basis of the channel estimation of the quantum communication channel; and
generating the secret key using the modified second subset of quantum signals;
**characterized in that**,
the receiver (120) is configured for:

randomly selecting multiple quantum signals in the stream of quantum signals to generate the first subset of quantum signals to be used for channel estimation, wherein the remaining quantum signals in the stream of quantum signals constitute a second subset of quantum signals to be used for generating the secret key, and exchanging information about the first subset of quantum signals with the transmitter via the classical communication channel so as to receive from the transmitter phase information about the first subset of quantum signals; and

dynamically adjusting the number of quantum signals in the first subset of quantum signals, wherein dynamically adjusting the number of quantum signals in the first subset of quantum signals comprises:

randomly selecting one or more quantum signals in the stream of quantum signals and determining a test error on the basis of the channel estimation of the quantum communication channel, and when the test error is larger than a training error, increasing a number of quantum signals included in the first subset of quantum signals.

2. The system (100) of claim 1, wherein the stream of quantum signals is a continuous stream of quantum signals and wherein the receiver is further configured for determining boundaries between successive quantum signals for synchronizing the receiver with the transmitter.

3. The system (100) of claim 1 or 2, wherein the receiver comprises a local oscillator (121) and a coupler (122), and the coupler is configured for amplifying the quantum signals in the stream of quantum signals by combining the stream of quantum signals with an output of the local oscillator.

4. The system (100) according to any one of the preceding claims, wherein the receiver further comprises a balanced detector (123) configured for demodulating the quantum signals in the stream of quantum signals.

5. The system (100) of any one of the preceding claims, wherein the receiver is specifically configured for modifying the second subset in the stream of quantum signals by adjusting the respective phase of the quantum signals in the second subset of the stream of quantum signals on the basis of the channel estimation of the quantum communication channel.

6. The system (100) of any one of the preceding claims, wherein the transmitter (110) comprises an attenuator (113) configured to attenuate the quantum signals.

7. A method for use in a continuous variable quantum key distribution system, the system comprising a transmitter and a receiver, wherein the transmitter and the receiver are configured for communication using a quantum communication channel and a classical communication channel, the method comprising:

performing, by the transmitter, the steps of:

modulating (601) a stream of quantum signals with a continuous distribution in phase and/or amplitude, and sending the stream of quantum signals to the receiver via the quantum communication channel; and

performing, by the receiver, the steps of:

receiving (603) the stream of quantum signals from the transmitter via the quantum communication channel,

performing (605) a channel estimation of the quantum communication channel on the basis of a first subset of the stream of quantum signals;

modifying (607) a second subset of quantum signals on the basis of the channel estimation of the quantum communication channel; and

generating the secret key using the modified second subset of quantum signals;

**characterized in that**, the method further comprises:

performing, by the receiver, the steps of:

randomly selecting multiple quantum signals in the stream of quantum signals to generate the first subset of quantum signals to be used for channel estimation, wherein the remaining quantum signals in the stream of quantum signals constitute a second subset of quantum signals to be used for generating the secret key, and exchanging information about the first subset of quantum signals with the transmitter via the classical communication channel so as to receive from the transmitter phase information about the first subset of quantum signals; and

dynamically adjusting the number of quantum signals in the first subset of quantum signals, wherein dynamically adjusting the number of quantum signals in the first subset of quantum signals comprises:

randomly selecting one or more quantum signals in the stream of quantum signals and determining a test error, and when the test error is larger than a training error determined on the basis of the channel estimation of the quantum communication channel, increasing a number of quantum signals included in the first subset of quantum signals.

8. The method of claim 7, wherein the stream of quantum signals is a continuous stream of quantum signals and wherein the method further comprises determining boundaries between successive quantum signals for synchronizing the receiver with the transmitter.

9. The method of claim 7 or 8, wherein the method further comprises amplifying, by the receiver, the quantum signals in the stream of quantum signals by combining the stream of quantum signals with an output of a local oscillator.

10. The method according to any one of the preceding claims, wherein the method further comprises demodulating the quantum signals in the stream of quantum signals.

11. The method of any one of the preceding claims, wherein the modifying the second subset in the stream of quantum signals comprises adjusting the respective phase of the quantum signals in the second subset of the stream of quantum signals on the basis of the channel estimation of the quantum communication channel.

12. The method of any one of the preceding claims, wherein the method further comprises attenuating, by the transmitter, the quantum signals in the stream of quantum signals.

**Patentansprüche**

1. System zur kontinuierlich variablen Quantenschlüsselverteilung (100), das einen Sender (110) und einen Empfänger (120) umfasst, wobei der Sender und der Empfänger für eine Kommunikation unter Verwendung eines Quantenkommunikationskanals und eines klassischen Kommunikationskanals konfiguriert sind;
wobei der Sender (110) zu Folgendem konfiguriert ist:

Modulieren eines Stroms von Quantensignalen mit einer kontinuierlichen Verteilung einer Phase und/oder Amplitude, und Senden des Stroms von Quantensignalen an den Empfänger über den Quantenkommunikationskanal; und
wobei der Empfänger (120) zu Folgendem konfiguriert ist:

Empfangen des Stroms von Quantensignalen von dem Sender über den Quantenkommunikati onskanal,
Durchführen einer Kanalschätzung des Quantenkommunikationskanals auf der Basis eines ersten Teilsatzes des Stroms von Quantensignalen;
Modifizieren eines zweiten Teilsatzes von Quantensignalen auf der Basis der Kanalschätzung des Quantenkommunikationskanals; und
Erzeugen des geheimen Schlüssels unter Verwendung des modifizierten zweiten Teilsatzes von Quantensignalen;
**dadurch gekennzeichnet, dass**
der Empfänger (120) zu Folgendem konfiguriert ist:

zufälliges Auswählen mehrerer Quantensignale in dem Strom von Quantensignalen, um den zur Kanalschätzung zu verwendenden ersten Teilsatz von Quantensignalen zu erzeugen, wobei die restlichen Quantensignale in dem Strom von Quantensignalen einen zum Erzeugen des geheimen Schlüssels zu verwendenden zweiten Teilsatz von Quantensignalen bilden, und Austauschen von Information über den ersten Teilsatz von Quantensignalen mit dem Sender über den klassischen Kommunikationskanal, um von dem Sender eine Phaseninformation über den ersten Teilsatz von Quantensignalen zu empfangen; und
dynamisches Anpassen der Anzahl von Quantensignalen in dem ersten Teilsatz von Quantensignalen, wobei das dynamische Anpassen der Anzahl von Quantensignalen in dem ersten Teilsatz von Quantensignalen Folgendes umfasst:
zufälliges Auswählen eines oder mehrerer Quantensignale in dem Strom von Quantensignalen und Bestimmen eines Prüffehlers auf der Basis der Kanalschätzung des Quantenkommunikationskanals, und wenn der Prüffehler größer als ein Trainingsfehler ist, Erhöhen einer Anzahl von in dem ersten Teilsatz von Quantensignalen enthaltenen Quantensignalen.

**2.** System (100) nach Anspruch 1, wobei der Strom von Quantensignalen ein kontinuierlicher Strom von Quantensignalen ist und wobei der Empfänger ferner zum Bestimmen von Grenzen zwischen aufeinanderfolgenden Quantensignalen zum Synchronisieren des Empfängers mit dem Sender konfiguriert ist.

**3.** System (100) nach Anspruch 1 oder 2, wobei der Empfänger einen lokalen Oszillator (121) und einen Koppler (122) umfasst, und wobei der Koppler zum Verstärken der Quantensignale in dem Strom von Quantensignalen durch Kombinieren des Stroms von Quantensignalen mit einer Ausgabe des lokalen Oszillators konfiguriert ist.

**4.** System (100) nach einem der vorhergehenden Ansprüche, wobei der Empfänger ferner einen symmetrischen Detektor (123) umfasst, der zum Demodulieren der Quantensignale in dem Strom von Quantensignalen konfiguriert ist.

**5.** System (100) nach einem der vorhergehenden Ansprüche, wobei der Empfänger insbesondere zum Modifizieren des zweiten Teilsatzes in dem Strom von Quantensignalen durch Anpassen der jeweiligen Phase der Quantensignale in dem zweiten Teilsatz des Stroms von Quantensignalen auf der Basis der Kanalschätzung des Quantenkommunikationskanals konfiguriert ist.

**6.** System (100) nach einem der vorhergehenden Ansprüche, wobei der Sender (110) einen Dämpfer (113) umfasst, der dazu konfiguriert ist, die Quantensignale zu dämpfen.

**7.** Verfahren zur Verwendung in einem System zur kontinuierlich variablen Quantenschlüsselverteilung, wobei das System einen Sender und einen Empfänger umfasst, wobei der Sender und der Empfänger für eine Kommunikation unter Verwendung eines Quantenkommunikationskanals und eines klassischen Kommunikationskanals konfiguriert sind, wobei das Verfahren Folgendes umfasst: Durchführen, durch den Sender, der folgenden Schritte:
Modulieren (601) eines Stroms von Quantensignalen mit einer kontinuierlichen Verteilung einer Phase und/oder Amplitude, und Senden des Stroms von Quantensignalen an den Empfänger über den Quantenkommunikationskanal; und Durchführen, durch den Empfänger, der folgenden Schritte:

Empfangen (603) des Stroms von Quantensignalen von dem Sender über den Quantenkommunikationskanal,
Durchführen (605) einer Kanalschätzung des Quantenkommunikationskanals auf der Basis eines ersten Teilsatzes des Stroms von Quantensignalen;
Modifizieren (607) eines zweiten Teilsatzes von Quantensignalen auf der Basis der Kanalschätzung des Quantenkommunikationskanals; und Erzeugen des geheimen Schlüssels unter Verwendung des modifizierten zweiten Teilsatzes von Quantensignalen;
**dadurch gekennzeichnet, dass** das Verfahren ferner Folgendes umfasst:
Durchführen, durch den Empfänger, der folgenden Schritte:

zufälliges Auswählen mehrerer Quantensignale in dem Strom von Quantensignalen, um den zur Kanalschätzung zu verwendenden ersten Teilsatz von Quantensignalen zu erzeugen, wobei die restlichen Quantensignale in dem Strom von Quantensignalen einen zum Erzeugen des geheimen Schlüssels zu verwendenden zweiten Teilsatz von Quantensignalen bilden, und Austauschen von Information über den ersten Teilsatz von Quantensignalen mit dem Sender über den klassischen Kommunikationskanal, um von dem Sender eine Phaseninformation über den ersten Teilsatz von Quantensignalen zu empfangen; und
dynamisches Anpassen der Anzahl von Quantensignalen in dem ersten Teilsatz von Quantensignalen, wobei das dynamische Anpassen der Anzahl von Quantensignalen in dem ersten Teilsatz von Quantensignalen Folgendes umfasst:
zufälliges Auswählen eines oder mehrerer Quantensignale in dem Strom von Quantensignalen und Bestimmen eines Prüffehlers, und wenn der Prüffehler größer als ein Trainingsfehler ist, der auf der Basis der Kanalschätzung des Quantenkommunikationskanals bestimmt wurde, Erhöhen einer Anzahl von in dem ersten Teilsatz von Quantensignalen enthaltenen Quantensignalen.

**8.** Verfahren nach Anspruch 7, wobei der Strom von Quantensignalen ein kontinuierlicher Strom von Quantensignalen ist und wobei das Verfahren ferner Bestimmen von Grenzen zwischen aufeinanderfolgenden Quantensignalen zum Synchronisieren des Empfängers mit dem Sender umfasst.

**9.** Verfahren nach Anspruch 7 oder 8, wobei das Verfahren ferner Verstärken, durch den Empfänger, der Quantensignale in dem Strom von Quantensignalen durch Kombinieren des Stroms von Quantensignalen mit einer Ausgabe des lokalen Oszillators umfasst.

**10.** Verfahren nach einem der vorhergehenden Ansprüche, wobei das Verfahren ferner Demodulieren der Quantensignale in dem Strom von Quantensignalen umfasst.

**11.** Verfahren nach einem der vorhergehenden Ansprüche, wobei das Modifizieren des zweiten Teilsatzes in dem Strom von Quantensignalen Anpassen der jeweiligen Phase der Quantensignale in dem zweiten Teilsatz des Stroms von Quantensignalen auf der Basis der Kanalschätzung des Quantenkommunikationskanals umfasst.

**12.** Verfahren nach einem der vorhergehenden Ansprüche, wobei das Verfahren ferner Dämpfen, durch den Sender, der Quantensignale in dem Strom von Quantensignalen umfasst.

## Revendications

**1.** Système de distribution quantique de clé à variable continue (100), comprenant un émetteur (110) et un récepteur (120), dans lequel l'émetteur et le récepteur sont configurés pour communiquer en utilisant un canal de communication quantique et un canal de communication classique ;

l'émetteur (110) est configuré pour :

moduler un flux de signaux quantiques avec une distribution continue en phase et/ou en amplitude, et envoyer le flux de signaux quantiques au récepteur via le canal de communication quantique ; et

le récepteur (120) est configuré pour :

recevoir le flux de signaux quantiques à partir de l'émetteur via le canal de communication quantique,

effectuer une estimation de canal du canal de communication quantique sur la base d'un premier sous-ensemble du flux de signaux quantiques ;

modifier un second sous-ensemble de signaux quantiques sur la base de l'estimation de canal du canal de communication quantique ; et

générer la clé secrète en utilisant le second sous-ensemble modifié de signaux quantiques ;

**caractérisé en ce que**,

le récepteur (120) est configuré pour :

sélectionner de manière aléatoire de multiples signaux quantiques dans le flux de signaux quantiques pour générer le premier sous-ensemble de signaux quantiques à utiliser pour l'estimation de canal, dans lequel les signaux quantiques restants dans le flux de signaux quantiques constituent un second sous-ensemble de signaux quantiques à utiliser pour générer la clé secrète, et échanger des informations concernant le premier sous-ensemble de signaux quantiques avec l'émetteur via le canal de communication classique de manière à recevoir à partir de l'émetteur des informations de phase concernant le premier sous-ensemble de signaux quantiques ; et

ajuster dynamiquement le nombre de signaux quantiques dans le premier sous-ensemble de signaux quantiques, dans lequel l'ajustement dynamique du nombre de signaux quantiques dans le premier sous-ensemble de signaux quantiques comprend de :

sélectionner de manière aléatoire un ou plusieurs signaux quantiques dans le flux de signaux quantiques et déterminer une erreur de test sur la base de l'estimation de canal du canal de communication quantique, et lorsque l'erreur de test est supérieure à une erreur d'apprentissage, augmenter un nombre de signaux quantiques inclus dans le premier sous-ensemble de signaux quantiques.

**2.** Système (100) selon la revendication 1, dans lequel le flux de signaux quantiques est un flux continu de signaux quantiques et dans lequel le récepteur est en outre configuré pour déterminer des limites entre des signaux quantiques successifs pour synchroniser le récepteur avec l'émetteur.

**3.** Système (100) selon la revendication 1 ou 2, dans lequel le récepteur comprend un oscillateur local (121) et un coupleur (122), et le coupleur est configuré pour amplifier les signaux quantiques dans le flux de signaux quantiques en combinant le flux de signaux quantiques avec une sortie de l'oscillateur local.

**4.** Système (100) selon l'une quelconque des revendications précédentes, dans lequel le récepteur comprend en outre un détecteur équilibré (123) configuré pour démoduler les signaux quantiques dans le flux de signaux quantiques.

**5.** Système (100) selon l'une quelconque des revendications précédentes, dans lequel le récepteur est spécifiquement configuré pour modifier le second sous-ensemble dans le flux de signaux quantiques en ajustant la phase respective des signaux quantiques dans le second sous-ensemble du flux de signaux quantiques sur la base de l'estimation de canal du canal de communication quantique.

6. Système (100) selon l'une quelconque des revendications précédentes, dans lequel l'émetteur (110) comprend un atténuateur (113) configuré pour atténuer les signaux quantiques.

7. Procédé destiné à être utilisé dans un système de distribution quantique de clé à variable continue, le système comprenant un émetteur et un récepteur, dans lequel l'émetteur et le récepteur sont configurés pour communiquer en utilisant un canal de communication quantique et un canal de communication classique, le procédé comprenant de :
effectuer, par l'émetteur, les étapes suivantes :

moduler (601) un flux de signaux quantiques avec une distribution continue en phase et/ou en amplitude, et envoyer le flux de signaux quantiques au récepteur via le canal de communication quantique; et
effectuer, par le récepteur, les étapes suivantes :

recevoir (603) le flux de signaux quantiques à partir de l'émetteur via le canal de communication quantique,
effectuer (605) une estimation de canal du canal de communication quantique sur la base d'un premier sous-ensemble du flux de signaux quantiques ;
modifier (607) un second sous-ensemble de signaux quantiques sur la base de l'estimation de canal du canal de communication quantique ; et
générer la clé secrète en utilisant le second sous-ensemble modifié de signaux quantiques ;
**caractérisé en ce que** le procédé comprend en outre de :
effectuer, par le récepteur, les étapes suivantes :

sélectionner de manière aléatoire de multiples signaux quantiques dans le flux de signaux quantiques pour générer le premier sous-ensemble de signaux quantiques à utiliser pour l'estimation de canal, dans lequel les signaux quantiques restants dans le flux de signaux quantiques constituent un second sous-ensemble de signaux quantiques à utiliser pour générer la clé secrète, et échanger des informations concernant le premier sous-ensemble de signaux quantiques avec l'émetteur via le canal de communication classique de manière à recevoir à partir de l'émetteur des informations de phase concernant le premier sous-ensemble de signaux quantiques ; et
ajuster dynamiquement le nombre de signaux quantiques dans le premier sous-ensemble de signaux quantiques, dans lequel l'ajustement dynamique du nombre de signaux quantiques dans le premier sous-ensemble de signaux quantiques comprend de :
sélectionner de manière aléatoire un ou plusieurs signaux quantiques dans le flux de signaux quantiques et déterminer une erreur de test, et lorsque l'erreur de test est supérieure à une erreur d'apprentissage déterminée sur la base de l'estimation de canal du canal de communication quantique, augmenter un nombre de signaux quantiques inclus dans le premier sous-ensemble de signaux quantiques.

8. Procédé selon la revendication 7, dans lequel le flux de signaux quantiques est un flux continu de signaux quantiques et dans lequel le procédé comprend en outre la détermination de limites entre des signaux quantiques successifs pour synchroniser le récepteur avec l'émetteur.

9. Procédé selon la revendication 7 ou 8, dans lequel le procédé comprend en outre l'amplification, par le récepteur, des signaux quantiques dans le flux de signaux quantiques en combinant le flux de signaux quantiques avec une sortie d'un oscillateur local.

10. Procédé selon l'une quelconque des revendications précédentes, dans lequel le procédé comprend en outre la démodulation des signaux quantiques dans le flux de signaux quantiques.

11. Procédé de l'une quelconque des revendications précédentes, dans lequel la modification du second sous-ensemble dans le flux de signaux quantiques comprend l'ajustement de la phase respective des signaux quantiques dans le second sous-ensemble du flux de signaux quantiques sur la base de l'estimation de canal du canal de communication quantique.

12. Procédé selon l'une quelconque des revendications précédentes, dans lequel le procédé comprend en outre l'atténuation, par l'émetteur, des signaux quantiques dans le flux de signaux quantiques.

Fig. 1

Q Q Q Q Q Q Q Q Q Q Q Q

Receiver's view

LO – CW Mode

Fig. 2

EP 3 580 886 B1

Transmitter (Alice)

| Original signal block 1 | Original signal block 2 |

Receiver (Bob)

| Received signal block 1 | Received signal block 2 |

select training data

select training data

DSP

DSP (working on sampled data)

Estimate and compensate for channel impairments

Classical channel

Post-processing

Post-processing (working on signals)
•Parameter estimation
•Error reconciliation
•Privacy amplification
•Etc...

Classical channel

Fig. 3

EP 3 580 886 B1

Alice sends random data to Bob

D D D D D D D D D D D D D D D D D D D D D D D D D D D D

| D |  Random data

Bob receives the signals.  Alice and Bob chooses some signals to be used for phase estimation

D D D E D D D E D D D E D D D E D D D E D D D E D D D

| E |  Data announced by Alice (via CC) for phase estimation

One Block

One block estimates one phase value which is applied for all signals in the block

Signal block N

Fig. 4

EP 3 580 886 B1

Frequency offset
estimation

N   N   N   N   N   N   N

N-signal block with key generating signals and training signals

Fig. 5

600

601
Modulating a stream of quantum signals with a continuous distribution in phase and amplitude, wherein each quantum signal defines a quantum coherent state

603
Receiving the stream of quantum signals via a quantum communication channel

605
Performing a channel estimation of the quantum communication channel on the basis of the quantum signals of a first subset of the stream of quantum signals

607
Modifying the quantum signals of a second subset of the stream of quantum signals on the basis of the channel estimation of the quantum communication channel for generating a secret key

Fig. 6

EP 3 580 886 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SEBASTIAN KLEIS ; REINHOLD HERSCHEL ; CHRISTIAN G. SCHAFFER.** Simple and Efficient Detection Scheme for Continuous Variable Quantum Key Distribution with m-ary Phase-Shift-Keying. *CLEO: 2015,* 2015
- **BING QI ; PAVEL LOUGOVSKI ; RAPHAEL POOSER ; WARREN GRICE ; MILJKO BOBREK.** Generating the local oscillator locally in continuous-variable quantum key distribution based on coherent detection. *Phys. Rev. X,* 2015, vol. 5, 041009
- **D. HUANG ; P. HUANG ; D. LIN ; C. WANG ; G. ZENG.** High-speed continuous-variable quantum key distribution without sending a local oscillator. *Optics Letters,* 2015, vol. 40, 3695
- **DANIEL B. S. SOH ; CONSTANTIN BRIF ; PATRICK J. COLES ; NORBERT LUTKENHAUS ; RYAN M. CAMACHO ; JUNJI URAYAMA ; MOHAN SAROVAR.** Self-referenced continuous-variable quantum key distribution protocol. *Phys. Rev. X,* 2015, vol. 5, 041010

- **GYONGYOSI L et al.** Adaptive Gaussian quadrature detection for continuous-variable quantum key distribution. *PROCEEDINGS OPTICAL DIAGNOSTICS OF LIVING CELLS II, SPIE, US,* 15 March 2016, vol. 9762, ISSN 0277-786X, ISBN 978-1-5106-1354-6, 97620E-97620E
- **BING QI et al.** Generating the Local Oscillator "Locally" in Continuous-Variable Quantum Key Distribution Based on Coherent Detection. *Physical Review X,* 01 October 2015, vol. 5 (4
- **LODEWYCK et al.** Quantum key distribution over 25 km with an all-fiber continuous-variable system. *Physical Review A,* 2007, vol. 76, 042305
- Unconditional security proof of long-distance continuous-variable quantum key distribution with discrete modulation. *Physical Review Letters,* 2009, vol. 102, 180504